# EUROPÄISCHE PATENTSCHRIFT

(11) **EP 3 601 116 B1**
(45) Veröffentlichungstag und Bekanntmachung des Hinweises auf die Patenterteilung: **24.08.2022**
(21) Anmeldenummer: 18701738.9
(22) Anmeldetag: 24.01.2018
(51) Int. Cl.: B65G 43/02

(54) **VERFAHREN ZUR ÜBERWACHUNG UND ZERSTÖRUNGSFREIEN PRÜFUNG EINES ENDLOS UMLAUFENDEN FÖRDERGURTES UND FÖRDERGURT DIAGNOSEEINRICHTUNG**
METHOD FOR MONITORING AND PERFORMING DESTRUCTION-FREE TESTING OF A CONTINUOUSLY CIRCULATING CONVEYOR BELT AND CONVEYOR BELT DIAGNOSTIC DEVICE
PROCÉDÉ POUR LA SURVEILLANCE ET LE CONTRÔLE NON DESTRUCTIF D'UNE BANDE TRANSPORTEUSE CIRCULANT SANS FIN ET DISPOSITIF DE DIAGNOSTIC DE BANDE TRANSPORTEUSE

(30) Priorität: 29.03.2017 DE 102017106806
(43) Veröffentlichungstag der Anmeldung: 05.02.2020
(73) Patentinhaber: RWE Power AG, 45141 Essen (DE)
(72) Erfinder: DENZER, Udo, 50354 Hürth (DE)
(74) Vertreter: Keenway Patentanwälte Neumann Heine Taruttis
(86) Internationale Anmeldenummer: PCT/EP2018/051695
(87) Internationale Veröffentlichungsnummer: WO 2018/177620

(56) Entgegenhaltungen:
- WO-A1-00/53517
- AU-A- 7 568 981
- CA-A- 483 863
- JP-A- S6 118 618
- US-A- 4 087 800

## Beschreibung

Die Erfindung betrifft ein Verfahren zur Überwachung und zerstörungsfreien Prüfung eines endlos umlaufenden Fördergurtes einer Gurtbandfördereranlage, vorzugsweise mit wenigstens einem in den Fördergurt eingebetteten metallenen Gurtzugträger und/oder mit wenigstens einem in den Fördergurt eingebetteten metallenen Marker, unter Verwendung wenigstens einer Gurtdiagnosespule, mit welcher der Fördergurt berührungslos abgetastet wird, wobei mittels der Gurtdiagnosespule fortlaufend ein von dem umlaufenden Fördergurt beeinflusstes Messsignal erfasst wird, das Messsignal einer Einrichtung zur Datenerfassung übermittelt wird und das Messsignal hinsichtlich einer Abweichung von einem Referenzsignal ausgewertet wird, sodass der Zustand der in dem Fördergurt integrierten metallenen Gurtzuträger und/oder der Zustand einer Gurtverbindung und/oder der Zustand des Fördergurtes anhand von signifikanten Veränderungen eines von dem Referenzsignal abweichenden Messsignals diagnostizierbar ist.

Ein Verfahren zur Überwachung eines endlos umlaufenden Fördergurtes, insbesondere zur Detektion von Metallteilen auf dem Fördergurt ist beispielsweise aus der DE 199 212 241 A1 bekannt. Das Verfahren wird unter Verwendung einer Einrichtung zur Überwachung des Fördergurtes betrieben, die in bekannter Art und Weise aus einer Senderspule und Empfängerspule besteht. Der Fördergurt durchläuft ein Spulengehäuse mit der zuvor beschriebenen Suchspulen-Anordnung. Das bekannte Verfahren und die bekannte Anordnung sind hauptsächlich dazu ausgelegt, Metallteile im Förderstrom aufzuspüren, um diese aus dem Förderstrom auszusondern. Zur Beurteilung der Beschaffenheit der Gurtzugträger ist das in der zuvor erwähnten Druckschrift beschriebene Verfahren eher weniger geeignet.

Ein anderes Verfahren zur Überwachung des Zustandes eines Fördergurtes ist beispielsweise aus der DE 10 2008 019 037 A1 bekannt. Nach diesem Verfahren ist eine Überwachung des Zustandes des Fördergurtes mittels einer oder mehrerer in den Fördergurt eingebetteter Messeinrichtungen vorgesehen, wobei die Messeinrichtungen mit elektrischer Energie betrieben werden, die über eine magnetische Kopplung eines schwingfähigen Feder-Masse-Systems mit den Tragrollen des Gurtbandförderers gewonnen wird.

Aus der EP 1 981 78 8 B1 ist ein Verfahren zur Überwachung und/oder zerstörungsfreien Prüfung eines Fördergurtes mit wenigstens einem magnetisierbaren Zugträger bekannt, bei dem eine ein- oder mehrachsige Messung des von dem Zugträger gestörten Erdmagnetfeldes durchgeführt wird, in dem wenigstens ein Magnetfeldsensor oder eine Anordnung mehrerer Magnetfeldsensoren relativ zu dem Fördergurt oder der Fördergurt relativ zu der Messanordnung geführt werden und die erfassten Messsignale mit einer Datenerfassungseinrichtung im Hinblick auf Anomalien des erfassten Magnetfeldes ausgewertet werden, wobei die Messung ohne Fremdmagnetisierung des Zugträgers durchgeführt wird. Dieses Verfahren geht auf eine Entwicklung im Hause der Anmelderin zurück. Zur Durchführung des Verfahrens werden Magnetfeldsensoren verwendet, mit welchen sich Gurtverbindungen sicher erkennen lassen. Schließlich offenbaren beziehungsweise die AU 75689 81 A und US 4 087 800 A Verfahren gemäß dem Oberbegriff der Ansprüche 1 und 15. Beide Druckschriften offenbaren ebenfalls eine Einrichtung gemäß dem Oberbegriff des Anspruchs 10.

Der Erfindung liegt die Aufgabe zugrunde, ein Verfahren der eingangs genannten Art hinsichtlich der Genauigkeit und der Praxistauglichkeit zu verbessern. Darüber hinaus liegt der Erfindung die Aufgabe zugrunde, eine entsprechende Fördergurt Diagnoseeinrichtung zur Durchführung des Verfahrens bereitzustellen.

Die der Erfindung zugrundeliegende Aufgabe wird gelöst durch die Merkmale der Ansprüche 1, 10 und 15 . Vorteilhafte Ausgestaltungen der Erfindung ergeben sich aus den Unteransprüchen. Ein Gesichtspunkt der Erfindung betrifft ein Verfahren zur Überwachung und zerstörungsfreien Prüfung eines endlos umlaufenden Fördergurtes einer Gurtbandfördereranlage, vorzugsweise mit wenigstens einem in den Fördergurt eingebetteten metallenen Gurtzugträger, unter Verwendung wenigstens einer Gurtdiagnosespule, mit welcher der Fördergurt berührungslos abgetastet wird, wobei mittels der Gurtdiagnosespule fortlaufend ein von dem umlaufenden Fördergurt beeinflusstes Messsignal erfasst wird, das Messsignal einer Einrichtung zur Datenerfassung übermittelt wird und das Messsignal hinsichtlich einer Abweichung von einem Referenzsignal ausgewertet wird, sodass der Zustand der in den Fördergurt integrierten metallenen Gurtzugträger und/oder der Zustand der Gurtverbindungen des Fördergurtes anhand einer signifikanten Veränderung eines von dem Referenzsignal abweichenden Messsignals diagnostizierbar sind, wobei die Gurtdiagnosespule als Bestandteil eines Reihenschwingkreises verwendet wird, der mit einer Wechselspannung angeregt wird.

Das Verfahren hat gegenüber den bekannten Verfahren den Vorteil, dass eine Verwendung von Permanentmagneten nicht mehr erforderlich ist. Anstelle von Permanentmagneten wird ein schwaches magnetisches Wechselfeld hoher Frequenz genutzt, was den Vorteil hat, dass keinerlei Aufmagnetisierung der Gurtzugträger stattfindet. Änderungen der Messsignale bedingt durch Alterung von Magneten werden vermieden. Das Verfahren liefert eine hohe Auflösung mit einem hohen Detailgrad sowie eine hohe Reproduzierbarkeit der Prüf- und Messergebnisse bei aufeinanderfolgenden Messungen eines gleichen Fördergurtes.

Unter einem Referenzsignal im Sinne der vorliegenden Erfindung ist das Signal eines typischen fehlerfreien Fördergurtes zu verstehen. Das Verfahren gemäß der Erfindung erfordert nicht notwendigerweise eine vorhergehende Zustandserfassung des Fördergurtes vor dessen Inbetriebnahme. Vielmehr kann ein Referenzsignal im Sinne der vorliegenden Erfindung auch ein typisches Schadensmuster oder Schadensbild sein, dass mit hinreichender Erfahrung aus entsprechenden Messschrieben erkennbar ist.

Das Verfahren gemäß der Erfindung ist nicht auf die Überwachung und Prüfung von Fördergurtes mit metallenen Gurtzugträgern beschränkt, vielmehr liefert das Verfahren ebenso die Möglichkeit der Überwachung und Prüfung von Gewebegurten ohne metallene Zugträger hinsichtlich bestimmter Merkmale.

Das Verfahren gemäß der Erfindung sieht auch vor, die Überwachung und Prüfung von Fördergurten mithilfe von in den Fördergurt eingebetteten metallenen Markern durchzuführen. Solche Marker, beispielsweise in Form von kleineren Blechen aus Stahl oder aus nicht Eisenmetallen können an verschiedenen Stellen des Fördergurtes in diesen einvulkanisiert werden.

Die Marker können beispielsweise dazu verwendet werden, den Anfang und/oder das Ende einer Gurtverbindung zu markieren. Die Marker können in dem mit dem Verfahren erzeugten Messsignal eindeutig erkannt werden.

Beispielsweise können Kombinationen aus Markern verwendet werden, die aus Eisenmetallen und aus Nichteisenmetallen bestehen, umso durch eine Kombination mehrerer nebeneinanderliegender metallener Marker aus Stahlblech und Nichteisenmetallen codierte Markierungen im Fördergurt zu erzeugen.

Wenn an bestimmten Stellen mehrere Marker in einem definierten Abstand zueinander bezogen auf die Länge des Fördergurtes in diesen eingebracht werden, kann anhand der Lage der Marker eine unzulässige Längung des Fördergurtes erkannt werden. Das Verfahren gemäß der Erfindung wird vorzugsweise an einem Gurtbandförderer mit einem endlos umlaufenden Fördergurt mit Gurtzugträgern in Form von Stahlseilen durchgeführt. Die Gurtzugträger sind in den aus einem gummielastischen Material bestehenden Fördergurt einvulkanisiert. Der Fördergurt ist aus mehreren Fördergurt-Abschnitten zusammengesetzt. Im Bereich der Verbindung der Abschnitte liegen die Gurtzugträger aufeinanderfolgender Fördergurt-Abschnitte nebeneinander, sodass jede Gurtverbindung wegen des in diesem Bereich deutlich erhöhten Anteils von ferromagnetischen Stahl ein signifikantes Messsignal liefert.

Mit dem Verfahren gemäß der Erfindung sind Schädigungen der Gurtzugträger oder Schädigungen der Gurtverbindungen erkennbar. Die Gurtzugträger können korrodieren, reißen oder durchschlagen werden. In der Regel sind die Gurtzugträger geschlagene Stahlseile. Wenn einzelne Litzen der Stahlseile korrodieren oder reißen, ist eine solche Schädigung mit dem Verfahren gemäß der Erfindung detektierbar, da sich die Induktivität der Gurtdiagnosespule, die Bestandteil des Reihenschwingkreises ist, ändert sobald diese Schädigung sich im Einflussbereich der Gurtdiagnosespule befindet.

Das Messverfahren gemäß der Erfindung ist so empfindlich, dass unterschiedliche Fördergurtabschnitte, aufgrund ihres eigenen charakteristischen Signalverlaufs (Fingerprint), bei aufeinanderfolgenden Messungen eindeutig identifizierbar sind. Vorzugsweise wird das Messsignal als Spulenstrom oder Spulenspannung der Einrichtung der Datenerfassung zugeführt. Das Datenerfassungssystem bzw. die Einrichtung zur Datenerfassung erfasst die sinusförmigen Spannungs-und Strommesswerte der Gurtdiagnosespule phasenrichtig mit hoher Abtastrate. Vorzugsweise bildet das Datenerfassungssystem von diesen Werten zeitkontinuierlich das Produkt, welches man als Scheinleistung der Spule bezeichnen kann.

Alle Effekte des Fördergurtes, die mit der erfindungsgemäß verwendeten Gurtdiagnosespule sichtbar gemacht werden können, können als amplitudenmodulierte Information bereitgestellt werden.

Bei dem Verfahren gemäß der Erfindung kann als Referenzsignal ein generisches Referenzsignal oder eine empirische Referenz zum Vergleich herangezogen werden. Signifikante Muster des Messsignals, welches verhältnismäßig hochauflösend erzeugt wird, lassen ohne weiteres auf Schädigungen des Fördergurtes schließen.

Bei einer Variante des Verfahrens gemäß der Erfindung kann vorgesehen sein, dass mindestens eine erste Abtastung des Fördergurtes über dessen gesamte Länge zur Erfassung des Referenzsignals durchgeführt wird. Das Referenzsignal kann dann als fördergurtspezifisches Signal gespeichert werden. Das Verfahren kann einen fortlaufenden Vergleich des Referenzsignals mit dem Messsignal vorsehen. Dieser Vergleich kann entweder visuell durch Überwachungspersonal, d.h. durch Auswertung an einem Bildschirm oder durch Auswertung entsprechender Messschriebe, oder automatisiert computergestützt erfolgen. Vorzugsweise wird als Erregerfrequenz des Reihenschwingkreises eine Frequenz gewählt, die kleiner als die Resonanzfrequenz des Reihenschwingkreises ist. Besonders vorzugsweise wird die Erregerfrequenz so gewählt, dass sie nur geringfügig unter der Resonanzfrequenz des Reihenschwingkreises ist. Der Reihenschwingkreis (L-C-Kreis) kann beispielsweise mit einer Frequenz in der Größenordnung zwischen 1,5 und 3 kHz, vorzugsweise mit einer Frequenz von etwa 2 kHz, angeregt werden.

Bei einer zweckmäßigen Variante des Verfahrens ist vorgesehen, dass das Messsignal zeitkontinuierlich als Produkt der Spannung und des Stromes der Gurtdiagnosespule erfasst wird. Alle Effekte in dem Gurt, die mit der Gurtdiagnosespule gemäß der Erfindung sichtbar gemacht werden, zeigen sich dann als amplitudenmodulierte Information auf der sinusförmigen Scheinleistung, wobei die Trägerfrequenz der Erregerfrequenz des Reihenschwingkreises entspricht.

Um aus dem amplitudenmodulierten Signal schnelle Änderungen, bedingt durch einen schnellen Durchgang des Fördergurtes unter oder über der Gurtdiagnosespule, sichtbar machen zu können, ist es zweckmäßig, das Signal einer Hüllkurvendemodulation zu unterziehen. Hierzu kann vorgesehen sein, die in der Einrichtung zur Datenerfassung berechnete Scheinleistung mit einem Hochpass achter Ordnung knapp unterhalb der Erregerfrequenz des Schwingkreises zu filtern. Von dem gefilterten Signal kann anschließend ein Absolutwert gebildet werden, der danach mit einem Tiefpass achter Ordnung mit einer Grenzfrequenz von etwa 1 kHz nochmals gefiltert werden kann.

Zweckmäßigerweise wird als Gurtdiagnosespule eine Flachspule verwendet. Beispielsweise kann eine Flachspule verwendet werden, die einen rechteckigen Querschnitt besitzt. Eine Flachspule im Sinne der vorliegenden Erfindung ist eine Spule, deren Spulenlänge klein ist im Vergleich zum Spulendurchmesser. Flachspulen haben die Eigenschaft, dass sie außerhalb der Spule Magnetfelder erzeugen, deren Reichweite im Vergleich zur Spulenlänge hoch ist.

Zweckmäßigerweise wird die Gurtdiagnosespule im Untertrum einer Gurtbandfördereranlage mit Abstand zu einer Laufseite des Fördergurtes ortsfest angeordnet und der umlaufende Fördergurt wird beim Betrieb der Gurtbandförderanlage kontinuierlich abgetastet. Die Laufseite des Fördergurtes ist diejenige Seite des Fördergurtes die im Obertrum auf den Laufrollen/Tragrollen der Gurtbandförderanlage aufliegt, wohingegen die Tragseite des Fördergurtes diejenige Seite des Fördergurtes ist, auf der das Schüttgut transportiert wird. Im Untertrum einer Gurtbandförderanlage ist die Laufseite des Fördergurtes dessen Oberseite.

Fördergurte, die mit dem Verfahren gemäß der Erfindung überwacht werden können, können beispielsweise eine Breite von etwa 2800 mm aufweisen. Die in die Fördergurte eingebetteten Stahlseile besitzen einen Durchmesser von etwa 10 mm und sind bei einer Teilung des Fördergurtes von etwa 15 mm einvulkanisiert. Die Umlaufgeschwindigkeit eines Fördergurtes in einer Gurtbandfördereranlage kann beispielsweise zwischen 5 und 8 m/s betragen. Ein Fördergurt mit einer Breite von etwa 2800 mm umfasst beispielsweise 165 nebeneinanderliegende Stahlseile.

Um einen vollständigen "Fingerabdruck" eines Fördergurtes messtechnisch erfassen zu können, ist es sinnvoll, die Breite des Fördergurtes mit mehreren Gurtdiagnosespule abzutasten, wobei jede Gurtdiagnosespule eine andere Spur auf der Breite des Fördergurtes abtastet und die Gurtdiagnosespulen über die Breite des Fördergurtes vorzugsweise so angeordnet sind, dass sie einander überlappende Messspuren erfassen. Selbstverständlich kann im Rahmen der vorliegenden Erfindung nur eine einzige Gurtdiagnosespule vorgesehen sein, die sich über die gesamte Breite des Fördergurtes erstreckt.

Ein weiterer Gesichtspunkt der Erfindung betrifft eine Fördergurt - Diagnoseeinrichtung zur Durchführung des zuvor beschriebenen Verfahrens, umfassend wenigstens eine Gurtdiagnosespule, einen Schaltkreis, in welchen die Gurtdiagnosespule integriert ist, eine Einrichtung zur Datenerfassung der Messsignale der Gurtdiagnosespule und Mittel zur Auswertung und/oder Darstellung entsprechend aufbereiteter Messsignale, wobei der Schaltkreis als Reihenschwingkreises ausgebildet ist.

Die Gurtdiagnosespule kann beispielsweise als Flachspule ausgebildet sein.

Eine Flachspule, die zur Durchführung des Verfahrens geeignet ist, kann beispielsweise eine Spulenlänge von 15 mm, eine Spulenbreite von 120 mm und eine Spulentiefe von 400 mm aufweisen. Auf einen als Isolator ausgebildeten Wickelkörper können beispielsweise 61 Windungen lackierter Kupferdraht mit einem Durchmesser von 1 mm zu einer Spule aufgewickelt werden.

Die Spule kann einen ohmschen Widerstand von zwischen 0,5 und 2,5 Ohm und eine Induktivität zwischen 1,5 und 3,0 mH aufweisen.

Die Fördergurt - Diagnoseeinrichtung gemäß der Erfindung kann eine Anordnung von mehreren Gurtdiagnosespulen mit sich überlappenden Messspuren über die Breite eines Fördergurtes umfassen.

Alternativ kann vorgesehen sein, dass eine Gurtdiagnosespule im Untertrum einer Gurtbandförderanlage an einem Spulenträger verfahrbar angeordnet ist.

Eine oder mehrere Gurtdiagnosespulen können beispielsweise mit einem Abstand von etwa 10 mm zur Laufseite des Fördergurtes angeordnet sein.

Die Erfindung wird nachstehend anhand eines in den Figuren dargestellten Ausführungsbeispiels erläutert.

Es zeigen:
- Figur 1: einen Schaltplan einer Fördergurt - Diagnoseeinrichtung gemäß der Erfindung,
- Figur 2: eine Darstellung die die Verschiebungen und Formänderungen der Amplitudenresonanzkurven des Reihenschwingkreises veranschaulicht,
- Figur 3: eine Darstellung, die die Formänderungen von Amplitudenresonanzkufen des Reihenschwingkreises ohne Verschiebung veranschaulicht,
- Figur 4: einen Ausschnitt aus einem Messschrieb einer Versuchsmessung mit einer Fördergurt - Diagnoseeinrichtung gemäß der Erfindung an einer Gurtbandförderanlage,
- Figur 5: einen Ausschnitt aus dem Messschrieb gemäß Figur 4, der stark vergrößert ist,
- Figur 6: einen weiteren Ausschnitt aus dem Messschrieb gemäß Figur 4 im Bereich einer Gurtverbindung und
- Figur 7: eine schematische Darstellung der Gurtzugträger im Bereich einer Gurtverbindung.

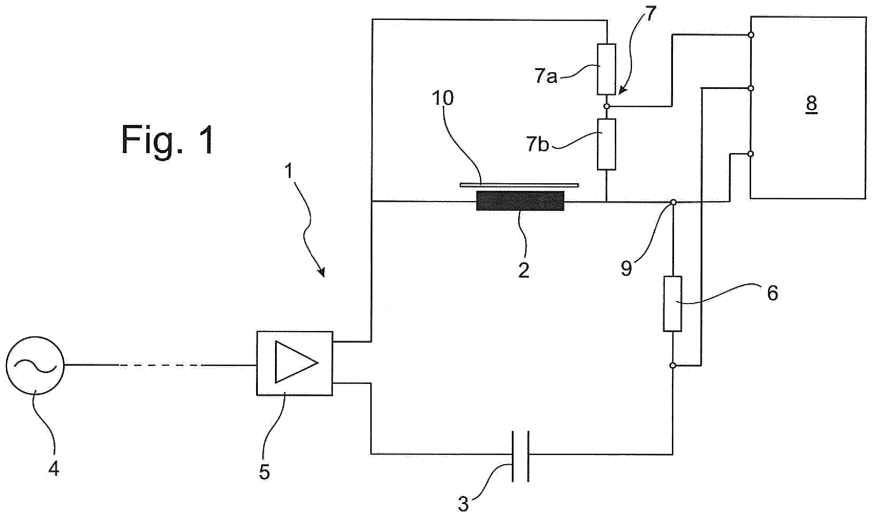

Im Folgenden wird zunächst die Fördergurt Diagnoseeinrichtung 1 anhand des in Figur 1 dargestellten Schaltplans erläutert. Zentrales Element der Fördergurt - Diagnoseeinrichtung ist eine als Flachspule ausgebildete Gurtdiagnosespule 2, die Teil eines Reihenschwingkreises ist. Der Reihenschwingkreis umfasst einen hochstromfähigen Kondensator 3, der beispielsweise eine Kapazität von 2 µF aufweist.

Der Reihenschwingkreise wird mittels eines Sinusoszillators 4 mit einem nachgeschalteten Leistungsverstärker 5 mit sinusförmiger Wechselspannung angeregt (Erregerspannung). Die Erregerfrequenz beträgt bei dem beschriebenen Ausführungsbeispiel etwa 2,05 kHz und befindet sich knapp unterhalb der Resonanzfrequenz des Reihenschwingkreises.

Zwischen der Gurtdiagnosespule 2 und dem Kondensator 3 befindet sich ein in Reihe geschalteter Messwiderstand 6 mit einem Widerstand von 0,1 Ohm. Der Messwiderstand 6 dient zur Bestimmung des Stroms der Gurtdiagnosespule 2. Parallel zu der Gurtdiagnosespule 2 ist ein aus zwei Widerständen 7A und 7B bestehender Spannungsteiler 7 geschaltet. Der Spannungsteiler 7 dient zur Messung der Spannung der Gurtdiagnosespule 2. Die beiden Messwerte in Form von Spannung und Strom der Gurtdiagnosespule 2 werden, bezogen auf die gleiche Masse (Masseanschluss 9 zwischen Gurtdiagnosespule 2 und Messwiderstand 6) einer Einrichtung zur Datenerfassung 8 zugeführt. Ein System zur Auswertung der von der Einrichtung zur Datenerfassung 8 erfassten Messwerte ist nicht dargestellt. Mit dem Bezugszeichen 10 ist in dem Schaltplan gemäß Figur 1 andeutungsweise der zu überwachende Fördergurt eingezeichnet.

Die Gurtdiagnosespule 2 ist beispielsweise ortsfest im Untertrum einer Gurtbandförderanlage oberhalb der Laufseite des Fördergurtes 10 mit einem Abstand von etwa 10 mm angeordnet. Der Fördergurt 10 bewegt sich durch das von der Gurtdiagnosespule 2 erzeugte magnetische Wechselfeld. Kleine Änderungen der Induktivitäten der Gurtdiagnosespule 2 führen zu einer signifikanten Änderung der Ausgangssignale des Reihenschwingkreises in Form von Strom und Spannung der Gurtdiagnosespule 2, wie nachstehend noch im Einzelnen erläutert wird.

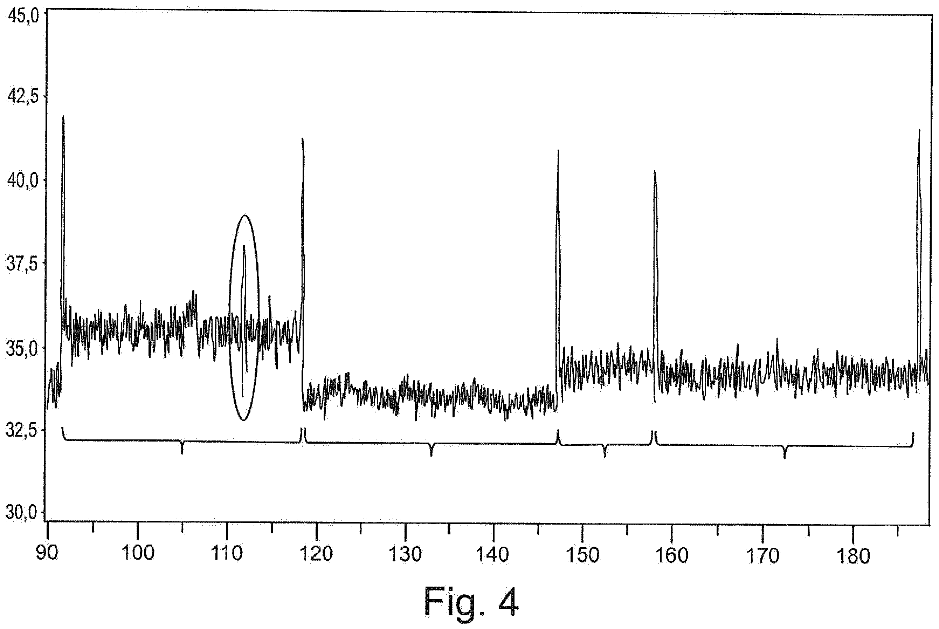

Die Einrichtung zur Datenerfassung 8 erfasst sinusförmige Spannungs- und Strommesswerte phasenrichtig mit hoher Abtastrate und bildet von diesen Werten zeitkontinuierlich das Produkt, welches die Scheinleistung der Gurtdiagnosespule 2 darstellt. Alle Effekte in dem Fördergurt 10, die mit der Gurtdiagnosespule 2 sichtbar gemacht werden können, zeigen sich als amplitudenmodulierte Informationen auf der sinusförmigen Scheinleistung (Trägerfrequenz gleich Erregerfrequenz des Reihenschwingkreises). In der Einrichtung zur Datenerfassung 8 wird die berechnete Scheinleistung mit einem Hochpass achter Ordnung knapp unterhalb der Erregerfrequenz des Reihenschwingkreises gefiltert. Von den gefilterten Signalen wird anschließend der Absolutwert gebildet, danach wird das Ergebnis der Rechenoperation mit einem Tiefpass achter Ordnung mit einer Grenzfrequenz von 1 kHz nochmals gefiltert. Das hierbei erhaltene Ausgangssignal ist beispielsweise in dem Messschrieb gemäß Figur 4 dargestellt.

Schäden an den Gurtzugträgern 12 des Fördergurtes 10, beispielsweise ein Abreißen eines Gurtzugträgers 12, bewirken einen veränderten Stahlseilanteil im Wirkungsbereich der Gurtdiagnosespule 2, was zu einer Veränderung der Induktivitäten der Gurtdiagnosespule 2 führt. Läuft eine Gurtverbindung 11 durch das Magnetfeld der Gurtdiagnosespule 2, befindet sich in diesem Moment ein deutlich erhöhter Stahlanteil im Wirkungsbereich der Gurtdiagnosespule 2. Das führt ebenfalls zu einer signifikanten Änderung der Induktivität der Gurtdiagnosespule 2 und somit zu einer Veränderung des Ausgangssignals der Messanordnung bzw. der Fördergurt-Diagnoseeinrichtung 1.

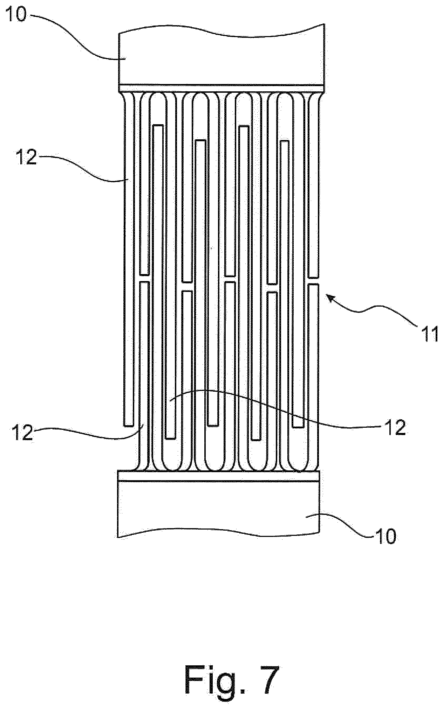

Eine Gurtverbindung 11 eines Fördergurtes 10 ist beispielsweise in Figur 7 dargestellt. Der Fördergurt 10 umfasst Gurtzugträger 12, die in das Gummi des Fördergurtes 10 einvulkanisiert sind. Im Bereich der Gurtverbindung 11 liegen die Gurtzugträger 12 teilweise nebeneinander, teilweise treffen diese stoßweise aufeinander, was im Bereich der Gurtverbindung 11 zu einem erhöhten Stahlanteil in dem betreffenden Querschnitt des Fördergurtes 10 führt. In Figur 7 ist aus Gründen der einfacheren Darstellung die Gurtverbindung 11 ohne das diese umgebende Gummi des Fördergurtes 10 dargestellt.

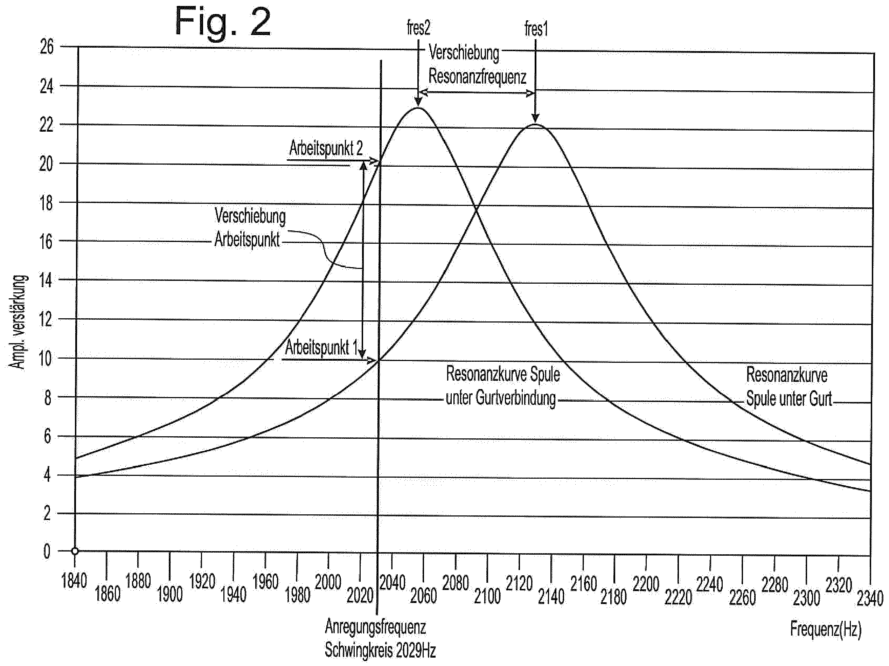

In Figur 2 ist eine typische Wirkung einer Induktivitätsvergrößerung der Gurtdiagnosespule 2, wie sie zum Beispiel durch den Überlauf einer Gurtverbindung 11 hervorgerufen wird, dargestellt. Die Vergrößerung der Induktivität durch einen höheren Anteil von Stahl im Wirkungsbereich der Gurtdiagnosespule 2 führt zu einer Verschiebung der Resonanzfrequenz von f _{Res 1} zu f _{Res 2}, die dann näher an der Erregerfrequenz des Reihenschwingkreises angesiedelt ist.

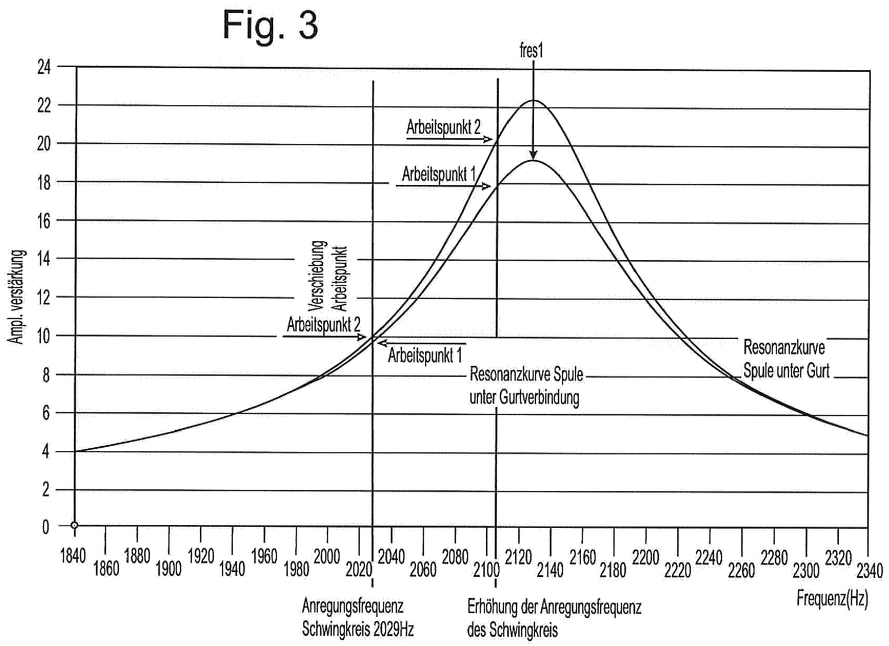

In Figur 3 ist eine andere Amplitudenresonanzkurve dargestellt, die die typische Wirkung eines Energieentzuges in der Gurtdiagnosespule zeigt, welche durch die Induktion von Wirbelströmen im Inneren von in dem Fördergurt befindlichen Metallteilen im Wirkungsbereich der Gurtdiagnosespule 2 hervorgerufen wird. Erhöht sich durch ein solches in den Gurt eingebrachtes Blech die Leitfähigkeit des Fördergurtes 10 im Wirkungsbereich der Gurtdiagnosespule 2, so führt die dadurch hervorgerufene Erhöhung der Wirbelströme und damit der Energieentzug aus der Spule nicht zu einer Verschiebung der Resonanzfrequenz, sondern lediglich zu einer Abflachung der Amplitudenresonanzkurve, weil der Energieentzug die Schwingkreisgüte herabsetzt. Diese Abflachung der Amplitudenresonanzkurve führt ebenfalls zu einer Verschiebung des Arbeitspunktes und somit zu einer Veränderung des Ausgangssignals der Messanordnung.

Figur 4 zeigt einen etwa 100 Sekunden langen Ausschnitt aus einem realen Messschrieb an einer Gurtbandförderanlage. Auf dem Messschrieb sind vier aufeinanderfolgende FördergurtAbschnitte von drei unterschiedlichen Herstellern dargestellt. Jeweils am Anfang und am Ende eines Fördergurt-Abschnittes zeigen sich die Gurtverbindungen 11, die sich mit relativ steiler Flanke und hoher Amplitude von den dazwischenliegenden Fördergurt-Abschnitten deutlich absetzen. Jeder Fördergurt-Abschnitt erzeugt ein für diesen Fördergurt-Abschnitt signifikantes Messsignal.

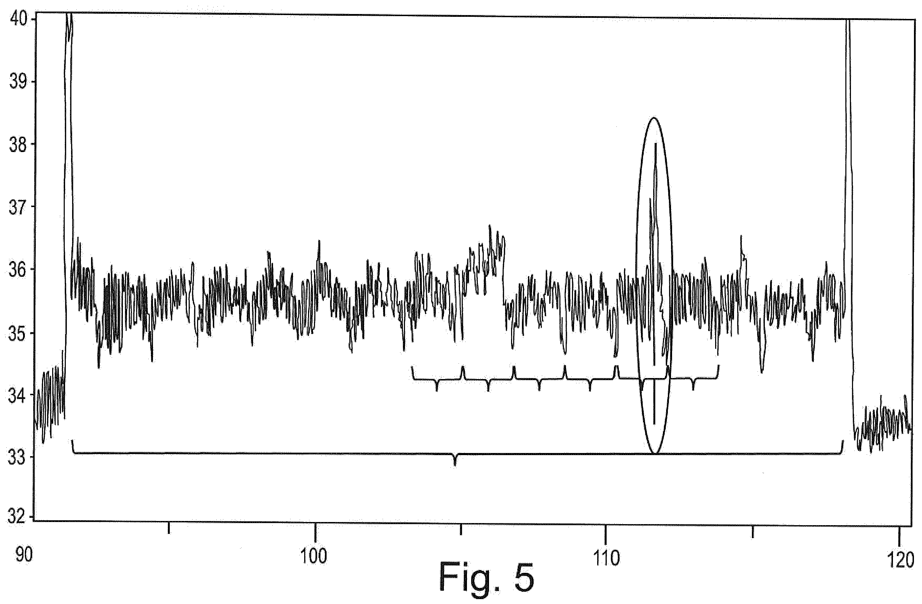

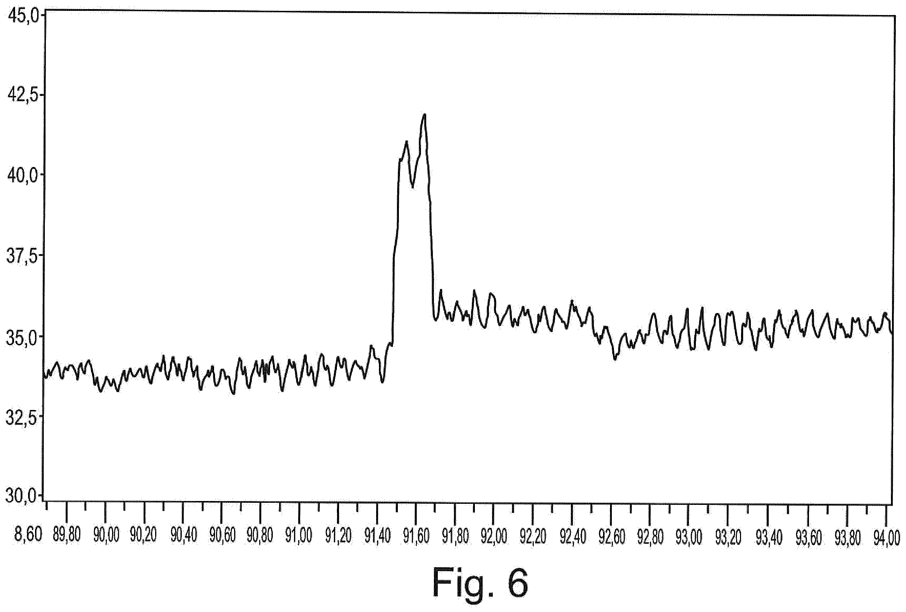

Figur 5 zeigt einen vergrößerten Ausschnitt aus dem in Figur 4 dargestellten Messschrieb im Bereich zwischen 90 und 120 Sekunden. Eingekreist ist das Signal eines Schadens an einem Gurtzugträger 12. Die nach unten gerichteten geschweiften Klammern markieren einen wiederkehrenden Abstand, der der Länge der bei dem Gurthersteller verwendeten Vulkanisierpresse aus dem Herstellungsprozess des Fördergurtes 10 entspricht. Figur 6 zeigt einen stark vergrößerten Ausschnitt zwischen 90 und 95 Sekunden aus dem in Figur 4 dargestellten Messschrieb. Der Ausschlag des Messsignals signalisiert die erste Gurtverbindung 11, der Signaleinbruch in der Mitte des signifikanten Signalausschlages kennzeichnet den Bereich der Stoßstellen der Gurtzugträger im Bereich der Gurtverbindung.

### Bezugszeichenliste

1 Fördergurt - Diagnoseeinrichtung
2 Gurtdiagnosespule
3 Kondensator
4 Sinusoszillator
5 Leistungsverstärker
6 Messwiderstand für den Spulenstrom
7 Spannungsteiler
7 A Widerstand des Spannungsteilers
7 B Widerstand des Spannungsteilers
8 Einrichtung zur Datenerfassung
9 Masseanschluss
10 Fördergurt
11 Gurtverbindung
12 Gurtzugträger

## Patentansprüche

1. Verfahren zur Überwachung und zerstörungsfreien Prüfung eines endlos umlaufenden Fördergurtes einer Gurtbandfördereranlage, mit wenigstens einem in den Fördergurt eingebetteten metallenen Gurtzugträger , unter Verwendung wenigstens einer Gurtdiagnosespule, (2) mit welcher der Fördergurt berührungslos abgetastet wird, wobei mittels der Gurtdiagnosespule (2) fortlaufend ein von dem umlaufenden Fördergurt beeinflusstes Messsignal erfasst wird, das Messsignal einer Einrichtung zur Datenerfassung (8) übermittelt wird und das Messsignal hinsichtlich einer Abweichung von einem Referenzsignal ausgewertet wird, so dass der Zustand der in dem Fördergurt integrierten metallenen Gurtzugträger und/oder der Zustand von Gurtverbindungen anhand von signifikanten Veränderungen eines von dem Referenzsignal abweichenden Messsignals diagnostiziert werden, **dadurch gekennzeichnet, dass** die Gurtdiagnosespule als Bestandteil eines Reihenschwingkreises verwendet wird, der mit einer Wechselspannung angeregt wird.

2. Verfahren nach Anspruch 1, **dadurch gekennzeichnet, dass** wenigsten ein metallener Marker in den Fördergurt eingebettet ist.

3. Verfahren nach Anspruch 1 oder 2, **dadurch gekennzeichnet, dass** das Messsignal als Spulenstrom und Spulenspannung der Einrichtung zur Datenerfassung zugeführt wird.

4. Verfahren nach einem der Ansprüche 1 bis 3, **dadurch gekennzeichnet, dass** wenigstens eine erste Abtastung des Fördergurtes über dessen gesamte Länge zur Erfassung des Referenzsignals erfolgt, das als fördergurtspezifisches Signal gespeichert wird, wobei ein fortlaufender Vergleich des Referenzsignals mit dem Messsignal erfolgt.

5. Verfahren nach einem der Ansprüche 1 bis 4, **dadurch gekennzeichnet, dass** als Erregerfrequenz des Reihenschwingkreises eine Frequenz gewählt wird, die kleiner als die Resonanzfrequenz des Reihenschwingkreises ist.

6. Verfahren nach einem der Ansprüche 1 bis 5, **dadurch gekennzeichnet, dass** das Messsignal zeitkontinuierlich als Produkt der Spannung und des Stroms der Gurtdiagnosespule erfasst wird.

7. Verfahren nach einem der Ansprüche 1 bis 6, **dadurch gekennzeichnet, dass** als Gurtdiagnosespule eine Flachspule verwendet wird.

8. Verfahren nach einem der Ansprüche 1 bis 7, **dadurch gekennzeichnet, dass** die Gurtdiagnosespule im Untertrum einer Gurtbandfördereranlage mit Abstand zu einer Laufseite des Fördergurtes ortsfest angeordnet wird und der umlaufende Fördergurt beim Betrieb der Gurtbandfördereranlage kontinuierlich abgetastet wird.

9. Verfahren nach einem der Ansprüche 1 bis 8, **dadurch gekennzeichnet, dass** die Breite des Fördergurtes mit mehreren Gurtdiagnosespulen abgetastet wird, wobei jede Gurtdiagnosespule eine andere Breite des Fördergurtes abtastet und die Gurtdiagnosespulen über die Breite des Fördergurtes vorzugsweise so angeordnet sind, dass sie einander überlappende Messbereiche erfassen.

10. Fördergurt - Diagnoseeinrichtung zur Durchführung des Verfahrens nach einem der Ansprüche 1 bis 9 umfassend wenigstens eine Gurtdiagnosespule (2), einen Schaltkreis, in welchen die Gurtdiagnosespule (2) integriert ist, eine Einrichtung zur Datenerfassung (8) von Messsignalen der Gurtdiagnosespule (2) und Mittel zur Auswertung und/oder Darstellung entsprechend aufbereiteter Messsignale, **dadurch gekennzeichnet, dass** der Schaltkreis als Reihenschwingkreises ausgebildet ist.

11. Fördergurt - Diagnoseeinrichtung nach Anspruch 10, **dadurch gekennzeichnet, dass** die Gurtdiagnosespule (2) als Flachspule ausgebildet ist.

12. Fördergurt - Diagnoseeinrichtung nach Anspruch 11, **dadurch gekennzeichnet, dass** die Gurtdiagnosespule (2) einen Widerstand zwischen 0,5 und 2,5 Ohm und eine Induktivität zwischen 1,5 und 3,0 mH aufweist.

13. Fördergurt - Diagnoseeinrichtung nach einem der Ansprüche 10 oder 11, **gekennzeichnet durch** eine Anordnung von mehreren Gurtdiagnosespulen (2) mit sich überlappenden Messbereichen über die Breite eines Fördergurtes (10).

14. Fördergurt - Diagnoseeinrichtung nach einem der Ansprüche 10 oder 11, **dadurch gekennzeichnet, dass** die Gurtdiagnosespule (2) verfahrbar an einem Spulenträger angeordnet ist.

15. Verfahren zur Überwachung und zerstörungsfreien Prüfung eines endlos umlaufenden Gewebefördergurtes ohne metallene Zugträger einer Gurtbandfördereranlage, mit wenigstens einem in den Fördergurt eingebetteten metallenen Marker, unter Verwendung wenigstens einer Gurtdiagnosespule (2), mit welcher der Fördergurt berührungslos abgetastet wird, wobei mittels der Gurtdiagnosespule (2) fortlaufend ein von dem umlaufenden Fördergurt beeinflusstes Messsignal erfasst wird, das Messsignal einer Einrichtung zur Datenerfassung (8) übermittelt wird und das Messsignal hinsichtlich einer Abweichung von einem Referenzsignal ausgewertet wird, so dass der Zustand von Gurtverbindungen und/ oder der Zustand des Fördergurtes anhand von signifikanten Veränderungen eines von dem Referenzsignal abweichenden Messsignals diagnostizierbar sind, **dadurch gekennzeichnet, dass** die Gurtdiagnosespule als Bestandteil eines Reihenschwingkreises verwendet wird, der mit einer Wechselspannung angeregt wird.

## Claims

1. Method for monitoring and non-destructively testing an endlessly circulating conveyor belt of a belt conveyor system with at least one metal belt tension member embedded in the conveyor belt, using at least one belt diagnostic coil (2) by means of which the conveyor belt is contactlessly sampled, a measurement signal influenced by the circulating conveyor belt being continuously recorded by the belt diagnostic coil (2), the measurement signal being transmitted to a device (8) for data recording, and the measurement signal being analyzed with regard to a deviation from a reference signal so that the state of the metal belt tension members integrated in the conveyor belt and/or the state of belt connections are diagnosed on the basis of significant changes in a measurement signal which deviates from the reference signal, **characterized in that** the belt diagnostic coil is used as part of a series resonant circuit which is excited with an alternating voltage.

2. Method according to claim 1, **characterized in that** at least one metal marker is embedded in the conveyor belt.

3. Method according to either claim 1 or claim 2, **characterized in that** the measurement signal is fed to the device as coil current and coil voltage for recording data.

4. Method according to any of claims 1 to 3, **characterized in that** at least a first sampling of the conveyor belt takes place over the entire length thereof in order to record the reference signal, which is stored as a conveyor-belt-specific signal, the reference signal being continuously compared with the measurement signal.

5. Method according to any of claims 1 to 4, **characterized in that** a frequency which is lower than the resonant frequency of the series resonant circuit is selected as the excitation frequency of the series resonant circuit.

6. Method according to any of claims 1 to 5, **characterized in that** the measurement signal is recorded continuously as the product of the voltage and the current of the belt diagnostic coil.

7. Method according to any of claims 1 to 6, **characterized in that** a flat coil is used as the belt diagnostic coil.

8. Method according to any of claims 1 to 7, **characterized in that** the belt diagnostic coil is arranged in a stationary manner in the return side of a belt conveyor system at a distance from a backing face of the conveyor belt, and the circulating conveyor belt is continuously sampled during operation of the belt conveyor system.

9. Method according to any of claims 1 to 8, **characterized in that** the width of the conveyor belt is sampled by means of a plurality of belt diagnostic coils, each belt diagnostic coil sampling a different width of the conveyor belt and the belt diagnostic coils preferably being arranged across the width of the conveyor belt in such a way that they record overlapping measurement ranges.

10. Conveyor belt diagnostic device for carrying out the method according to any of claims 1 to 9, comprising at least one belt diagnostic coil (2), a circuit in which the belt diagnostic coil (2) is integrated, a device (8) for data recording of measurement signals from the belt diagnostic coil (2), and means for analyzing and/or displaying correspondingly processed measurement signals, **characterized in that** the circuit is in the form of a series resonant circuit.

11. Conveyor belt diagnostic device according to claim 10, **characterized in that** the belt diagnostic coil (2) is in the form of a flat coil.

12. Conveyor belt diagnostic device according to claim 11, **characterized in that** the belt diagnostic coil (2) has a resistance of between 0.5 and 2.5 ohms and an inductance of between 1.5 and 3.0 mH.

13. Conveyor belt diagnostic device according to either claim 10 or claim 11, **characterized by** an arrangement of a plurality of belt diagnostic coils (2) with overlapping measurement ranges over the width of a conveyor belt (10).

14. Conveyor belt diagnostic device according to either claim 10 or claim 11, **characterized in that** the belt diagnostic coil (2) is movably arranged on a coil carrier.

15. Method for monitoring and non-destructively testing an endlessly circulating woven conveyor belt, without metal tension members, of a belt conveyor system with at least one metal marker embedded in the conveyor belt, using at least one belt diagnostic coil (2) by means of which the conveyor belt is contactlessly sampled, a measurement signal influenced by the circulating conveyor belt being continuously recorded by the belt diagnostic coil (2), the measurement signal being transmitted to a device (8) for data recording, and the measurement signal being analyzed with regard to a deviation from a reference signal so that the state of belt connections and/or the state of the conveyor belt can be diagnosed on the basis of significant changes in a measurement signal which deviates from the reference signal, **characterized in that** the belt diagnostic coil is used as part of a series resonant circuit which is excited with an alternating voltage.

## Revendications

1. Procédé de surveillance et de vérification non destructive d'une bande transporteuse circulant sans fin d'une installation de transport à bande, comportant au moins un support métallique de traction de bande incorporé dans la bande transporteuse, à l'aide d'au moins une bobine de diagnostic de bande (2) avec laquelle la bande transporteuse est balayée sans contact, dans lequel, au moyen de la bobine de diagnostic de bande (2), un signal de mesure influencé par la bande transporteuse en circulation est enregistré en continu, le signal de mesure est transmis à un dispositif d'enregistrement des données (8) et le signal de mesure est évalué en ce qui concerne un écart par rapport à un signal de référence de telle sorte que l'état des supports métalliques de traction de bande intégrés dans la bande transporteuse et/ou l'état des liaisons de bande sont diagnostiqués en fonction des changements significatifs d'un signal de mesure s'écartant du signal de référence, **caractérisé en ce que** la bobine de diagnostic de bande est utilisée en tant que partie intégrante d'un circuit résonant série, laquelle est excitée avec une tension alternative.

2. Procédé selon la revendication 1, **caractérisé en ce qu'**au moins un repère métallique est incorporé dans la bande transporteuse.

3. Procédé selon la revendication 1 ou 2, **caractérisé en ce que** le signal de mesure est amené au dispositif d'enregistrement des données sous forme de courant de bobine et de tension de bobine.

4. Procédé selon l'une quelconque des revendications 1 à 3, **caractérisé en ce qu'**au moins un premier balayage de la bande transporteuse est effectué sur toute sa longueur afin d'enregistrer le signal de référence, lequel est sauvegardé comme signal spécifique à la bande transporteuse, dans lequel une comparaison en continu du signal de référence au signal de mesure est effectuée.

5. Procédé selon l'une quelconque des revendications 1 à 4, **caractérisé en ce qu'**une fréquence, laquelle est inférieure à la fréquence de résonance du circuit résonant série, est choisie comme fréquence d'excitation du circuit résonant série.

6. Procédé selon l'une quelconque des revendications 1 à 5, **caractérisé en ce que** le signal de mesure est enregistré en continu dans le temps comme produit de la tension et du courant de la bobine de diagnostic de bande.

7. Procédé selon l'une quelconque des revendications 1 à 6, **caractérisé en ce qu'**une bobine plate est utilisée comme bobine de diagnostic de bande.

8. Procédé selon l'une quelconque des revendications 1 à 7, **caractérisé en ce que** la bobine de diagnostic de bande est disposée de manière fixe dans le brin inférieur d'une installation de transport à bande, à distance d'un côté de roulement de la bande transporteuse, et la bande transporteuse en circulation est balayée en continu lors du fonctionnement de l'installation de transport à bande.

9. Procédé selon l'une quelconque des revendications 1 à 8, **caractérisé en ce que** la largeur de la bande transporteuse est balayée à l'aide de plusieurs bobines de diagnostic de bande, dans lequel chaque bobine de diagnostic de bande balaye une largeur différente de la bande transporteuse et les bobines de diagnostic de bande sont disposées sur la largeur de la bande transporteuse, de préférence de telle sorte qu'elles enregistrent des zones de mesure se chevauchant.

10. Dispositif de diagnostic de bande transporteuse destiné à la mise en œuvre du procédé selon l'une quelconque des revendications 1 à 9, comprenant au moins une bobine de diagnostic de bande (2), un circuit de commutation dans lequel la bobine de diagnostic de bande (2) est intégrée, un dispositif d'enregistrement des données (8) des signaux de mesure de la bobine de diagnostic de bande (2) et
un moyen d'évaluation et/ou d'affichage des signaux de mesure traités de manière correspondante, **caractérisé en ce que** le circuit de commutation est conçu sous la forme de circuit résonant série.

11. Dispositif de diagnostic de bande transporteuse selon la revendication 10, **caractérisé en ce que** la bobine de diagnostic de bande (2) est conçue sous la forme de bobine plate.

12. Dispositif de diagnostic de bande transporteuse selon la revendication 11, **caractérisé en ce que** la bobine de diagnostic de bande (2) présente une résistance comprise entre 0,5 et 2,5 ohms et une inductance comprise entre 1,5 et 3,0 mH.

13. Dispositif de diagnostic de bande transporteuse selon l'une des revendications 10 ou 11, **caractérisé par** un agencement de plusieurs bobines de diagnostic de bande (2) comportant des zones de mesure se chevauchant sur la largeur d'une bande transporteuse (10).

14. Dispositif de diagnostic de bande transporteuse selon l'une des revendications 10 ou 11, **caractérisé en ce que** la bobine de diagnostic de bande (2) est disposée de manière à pouvoir se déplacer sur un porte-bobines.

15. Procédé de surveillance et de vérification non destructive d'une bande transporteuse textile circulant sans fin sans supports métalliques de traction d'une installation de transport à bande, comportant au moins un marqueur métallique incorporé dans la bande transporteuse, à l'aide d'au moins une bobine de diagnostic de bande (2) avec laquelle la bande transporteuse est balayée sans contact, dans lequel, au moyen de la bobine de diagnostic de bande (2), un signal de mesure influencé par la bande transporteuse en circulation est enregistré en continu, le signal de mesure est transmis à un dispositif d'enregistrement des données (8) et le signal de mesure est évalué en ce qui concerne un écart par rapport à un signal de référence de telle sorte que l'état de liaisons de bande et/ou l'état de la bande transporteuse peuvent être diagnostiqués en fonction des changements significatifs d'un signal de mesure s'écartant du signal de référence, **caractérisé en ce que** la bobine de diagnostic de bande est utilisée en tant que partie intégrante d'un circuit résonant série, laquelle est excitée avec une tension alternative.
